(19) Europäisches Patentamt
European Patent Office
Office européen des brevets

(11) **EP 4 401 337 A1**

(12) **EUROPEAN PATENT APPLICATION**
published in accordance with Art. 153(4) EPC

(43) Date of publication:
**17.07.2024 Bulletin 2024/29**

(21) Application number: **22874581.6**

(22) Date of filing: **06.09.2022**

(51) International Patent Classification (IPC):
**H04B 7/185** (2006.01)

(52) Cooperative Patent Classification (CPC):
**H04B 7/185; H04J 3/06**

(86) International application number:
**PCT/CN2022/117244**

(87) International publication number:
**WO 2023/051191 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2021 CN 202111157401**

(71) Applicant: **Huawei Technologies Co., Ltd.
Shenzhen, Guangdong 518129 (CN)**

(72) Inventors:
• **KONG, Chuili**
**Shenzhen, Guangdong 518129 (CN)**
• **CHEN, Ying**
**Shenzhen, Guangdong 518129 (CN)**
• **LI, Rong**
**Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **METHOD FOR DETERMINING COMMON TA, AND COMMUNICATION APPARATUS**

(57) Embodiments of this application provide a common timing advance TA determining method and a communication apparatus, and relate to the field of communication technologies. After determining a first message, a satellite may transmit the first message to a terminal device. The first message includes a parameter of a common TA function, the parameter of the common TA function is preconfigured, and the parameter of the TA function one-to-one corresponds to a time period. After obtaining the first message, the terminal device may determine a common TA based on the parameter of the common TA function. After determining the common TA, the terminal device may perform timing advance adjustment, to implement synchronous communication between the terminal device and the satellite. In this application, the parameter of the common TA function is preconfigured, one-to-one corresponds to the time period, and is not determined through real-time calculation. Updating of the parameter of the common TA function is also associated with the time period. A longer update period indicates lower signaling overheads. In addition, data processing efficiency can be improved by performing synchronization according to the common TA determining method.

FIG. 2

**Description**

**CROSS-REFERENCE TO RELATED APPLICATIONS**

This application claims priority to Chinese Patent Application No. 202111157401.4, filed with the China National Intellectual Property Administration on September 30, 2021 and entitled "COMMON TA DETERMINING METHOD AND COMMUNICATION APPARATUS", which is incorporated herein by reference in its entirety.

**TECHNICAL FIELD**

Embodiments of this application relate to the field of communication technologies, and in particular, to a common TA determining method and a communication apparatus.

**BACKGROUND**

A satellite communication system is different from a new radio (new radio, NR) communication system. Because a satellite is far away from the ground and moves quickly, relative positions between the satellite and a terrestrial gateway (gateway, GW) station and user equipment (user equipment, UE) change greatly. Therefore, a NR-based synchronization solution is not applicable to the satellite system. Particularly, for a design of a timing advance (timing advance, TA), to implement synchronous communication between a terminal device and the satellite, a large quantity of parameters associated with the TA is carried in each broadcast message, and the parameters associated with the TA are frequently updated, resulting in high signaling overheads.

**SUMMARY**

This application provides a common TA determining method and a communication apparatus, to reduce signaling overheads for determining a timing advance.

According to a first aspect, this application provides a common TA determining method. The method may be implemented through interaction between a satellite and a terminal device. The terminal device may be user equipment (user equipment, UE), a vehicle-mounted device, or the like, or may be understood as a module (for example, a chip) in the terminal device. This is not specifically limited in this application. The satellite may be a geostationary satellite, a non-geostationary satellite, an artificial satellite, a low-orbit satellite, a medium-orbit satellite, a high-orbit satellite, or the like. This is not specifically limited in this application. During execution:

The satellite may determine a first message. The first message includes a parameter of a common TA function, the parameter of the common TA function is preconfigured, and the parameter of the common TA function one-to-one corresponds to a time period. Then, the satellite transmits the first message to the terminal device, and the terminal device determines a common TA based on the parameter of the common TA function.

It should be noted that the common TA function is determined based on satellite ephemeris information (indicating a satellite orbit parameter, where a satellite orbit of each satellite is fixed, but satellite orbits of different satellites may be different) and a location of a reference point (for example, a terrestrial GW). Different satellites correspond to different common TA functions, and a same satellite also determines different common TA functions when selecting different reference points. This is not specifically limited in this application. Communication between the satellite and the terminal device usually further needs to be implemented depending on a network device. Both the network device and the terminal device know a curve of the common TA function. The network device may calculate parameters of the common TA function corresponding to different time periods, transmit the calculated parameters of the common TA function to the satellite, and send the calculated parameters of the common TA function to the terminal device via the satellite, so that the terminal device synchronizes with the satellite based on the parameters of the common TA function in the different time periods.

Generally, the satellite communicates with a plurality of terminal devices. After receiving a common TA parameter transmitted by the network device, the satellite may send the first message to each terminal device in a broadcast manner. After receiving the first message, the terminal device may determine a timing advance based on information about the common TA parameter in the first message, and synchronize with the satellite based on the timing advance. The first message may be further understood as a configuration message, and the terminal device may determine, based on the message, how to configure the common TA.

In this application, the parameter of the common TA function is preconfigured, one-to-one corresponds to the time period, and is not determined through real-time calculation. Updating of the parameter of the common TA function is also associated with the time period. A longer update period indicates lower signaling overheads. In addition, data processing efficiency can be improved by performing synchronization according to the common TA determining method.

In an optional manner, the first message further includes indication information, and the indication information may indicate an order of the common TA function. Correspondingly, the terminal device may obtain the indication information, and determine the common TA based on the parameter of the common TA function and the order of the common TA function.

It should be noted that the first message may also be directly sent by the satellite, and is not carried in the first message, and is carried by using other information or signaling. A carrying manner of the first message is not specifically limited herein in this application.

It should be further noted that TA functions corresponding to the different time periods may be different. An order of the common TA function in a time period is indicated by the indication information, so that the terminal device quickly determines parameters that are of the common TA function and that are to be used to determine the common TA. In this manner, data processing efficiency can be improved.

In an optional manner, the indication information may be carried by using the following signaling: a system information block (system information block, SIB) or a master information block (master information block, MIB).

It should be noted that, because the common TA is a delay between the satellite and the reference point, and users in a cell are covered by a same satellite. Therefore, the common TA is the same, that is, the common TA may be sent to each user in the cell in a broadcast manner. Therefore, the common TA may be carried by using a broadcast message, for example, a SIB or an MIB. In addition, the common TA needs to be obtained before random access, and is used for timing advance of sending a random access preamble by the user. Therefore, the common TA needs to be carried in the broadcast message.

In an optional manner, an index value may indicate a value of the parameter of the common TA function.

It should be noted that the terminal device and the network device may maintain a same table. The table may include the index value and the value of the parameter of the TA function. For example, after the satellite broadcasts an index 1 based on the first message, the terminal device may learn, based on the maintained table, that parameters corresponding to the index 1 are a1 b1, and c1, and may determine the common TA based on a1 b1, and c1. The value of the parameter of the common TA function is indicated in an index manner, to avoid that a large amount of data is carried when the first message is broadcast. In this manner, a data sending amount can be reduced, and when the data sending amount is reduced, signaling overheads can be reduced, and communication efficiency can be improved.

In an optional manner, the time period indicates a time interval between updating the parameter of the common TA function for an $N^{th}$ time and updating the parameter of the common TA function for an $(N+1)^{th}$ time, and N is a positive integer. The time period is related to a satellite elevation, and different satellite elevations correspond to different lengths of the time period.

It should be noted that, during actual application, the parameter of the common TA function does not always remain unchanged, but needs to be updated. For example, if a time interval between updating the parameter of the first common TA function for a $1^{st}$ time and updating the parameter of the second common TA function for a $2^{nd}$ time is 20 seconds, the time period may be 20 seconds. This is merely an example and is not specifically limited herein. Generally, the satellite elevation indicates an included angle between the satellite, the terminal device, and a horizontal plane. A smaller included angle indicates a longer distance between the satellite and the terminal device, a longer time period, and a longer update period of the parameter of the common TA function. A larger included angle indicates a shorter distance between the satellite and the terminal device, a shorter time period, and a shorter update period of the parameter of the common TA function. In this manner, the update period of the parameter of the common TA function is flexibly adjusted, so that signaling overheads can be reduced. Specifically, the satellite broadcasts different parameters of the common TA function for different cells in a coverage area. For a cell with a large satellite elevation, the satellite performs broadcasting in a short time period. For a cell with a small satellite elevation, the satellite performs broadcasting in a long time period.

According to a second aspect, this application provides a communication apparatus. The communication apparatus may be understood as a terminal device, for example, UE or a vehicle-mounted device, or may be understood as a module (for example, a chip) in the terminal device. This is not specifically limited in this application. The communication apparatus includes a transceiver unit and a processing unit.

The transceiver unit is configured to obtain a first message. The first message includes a parameter of a common TA function, the parameter of the common TA function is preconfigured, and the parameter of the common TA function one-to-one corresponds to a time period. The processing unit is configured to determine a common TA based on the parameter of the common TA function.

In an optional manner, the first message further includes indication information, and the indication information indicates an order of the common TA function.

In an optional manner, the processing unit is specifically configured to determine the common TA based on the parameter of the common TA function and the order of the common TA function.

In an optional manner, the indication information may be carried by using the following signaling: a SIB or an MIB.

In an optional manner, an index value indicates a value of the parameter of the common TA function.

In an optional manner, the time period indicates a time interval between updating the parameter of the common TA function for an $N^{th}$ time and updating the parameter of the common TA function for an $(N+1)^{th}$ time, and N is a positive integer. The time period is related to a satellite elevation, and different satellite elevations correspond to different lengths of the time period.

For the second aspect, it should be understood that the transceiver unit may be referred to as an input/output unit, a communication unit, or the like. When the communication apparatus is a terminal device, the transceiver unit may be a transceiver, and the processing unit may be a processor. When the communication apparatus is a module (for example, a chip) in the terminal device, the transceiver unit may be an input/output interface, an input/output circuit, an input/output pin, or the like, and may also be referred to as an interface, a communication interface, an interface circuit, or the like. The processing unit may be a processor, a processing circuit, a logic circuit, or the like.

According to a third aspect, this application provides a communication apparatus. The communication apparatus may be understood as a satellite, for example, a geostationary satellite, a non-geostationary satellite, an artificial satellite, a low-orbit satellite, a medium-orbit satellite, or a high-orbit satellite. This is not specifically limited in this application. The communication apparatus includes a transceiver unit and a processing unit.

The processing unit is configured to determine a first message. The first message includes a parameter of a common TA function, the parameter of the common TA function is preconfigured, and the parameter of the common TA function one-to-one corresponds to a time period. The transceiver unit is configured to transmit the first message.

In an optional manner, the first message further includes indication information, and the indication information indicates an order of the common TA function.

In an optional manner, the indication information is carried by using the following signaling: a SIB or an MIB.

In an optional manner, an index value indicates a value of the parameter of the common TA function.

In an optional manner, the time period indicates a time interval between updating the parameter of the common TA function for an $N^{th}$ time and updating the parameter of the common TA function for an $(N+1)^{th}$ time, and N is a positive integer. The time period is related to a satellite elevation, and different satellite elevations correspond to different lengths of the time period.

For the third aspect, it should be understood that the transceiver unit may be referred to as an input/output unit, a communication unit, or the like. When the communication apparatus is a satellite, the transceiver unit may be a transceiver, and the processing unit may be a processor. When the communication apparatus is a module (for example, a chip) in the satellite, the transceiver unit may be an input/output interface, an input/output circuit, an input/output pin, or the like, and may also be referred to as an interface, a communication interface, an interface circuit, or the like. The processing unit may be a processor, a processing circuit, a logic circuit, or the like.

According to a fourth aspect, this application provides a communication apparatus, including a processor. The processor is coupled to or decoupled from a memory.

The memory is configured to store a computer program or instructions. When the apparatus runs, the processor executes the computer program or the instructions, so that the communication apparatus performs the method in the first aspect or the embodiments of the first aspect.

According to a fifth aspect, this application provides another communication apparatus, including a logic circuit and an input/output interface. The input/output interface may be understood as an interface circuit, and the logic circuit may be configured to run code instructions to perform the method in the first aspect or the embodiments of the first aspect.

According to a sixth aspect, this application further provides a computer-readable storage medium. The computer-readable storage medium stores computer-readable instructions. When the computer-readable instructions are run on a computer, the computer is enabled to perform the method in any one of the first aspect or the possible designs of the first aspect.

According to a seventh aspect, this application provides a computer program product including instructions. When the computer program product is run on a computer, the computer is enabled to perform the method in the first aspect or the implementations of the first aspect.

According to an eighth aspect, this application provides a chip system. The chip system includes a processor, and may further include a memory, configured to implement the method in any one of the first aspect or the possible designs of the first aspect. The chip system may include a chip, or may include the chip and another discrete device.

According to a ninth aspect, this application provides a communication system. The system includes a terminal device, a satellite, and a network device, and the communication system is configured to perform the method in any one of the first aspect or the possible designs of the first aspect.

For technical effects that can be achieved in the second aspect to the ninth aspect, refer to descriptions of technical effects that can be achieved in the corresponding possible design solutions in the first aspect. Details are not described herein again in this application.

## BRIEF DESCRIPTION OF DRAWINGS

FIG. 1 is a schematic diagram of a communication system according to an embodiment of this application;
FIG. 2 is a schematic flowchart of a common TA determining method according to an embodiment of this application;
FIG. 3 is a schematic diagram of a curve of a common TA function according to an embodiment of this application;
FIG. 4 is a schematic diagram of comparison of simulation results;
FIG. 5 is a schematic diagram of a structure of a communication apparatus according to an embodiment of this application;
FIG. 6 is a schematic diagram of a structure of a communication apparatus according to an embodiment of this application; and
FIG. 7 is a schematic diagram of a structure of a communication apparatus according to an embodiment of this application.

## DESCRIPTION OF EMBODIMENTS

To make the objectives, technical solutions, and advantages of this application clearer, the following further describes this application in detail with reference to the accompanying drawings. A specific operation method in a method embodiment may also be applicable to an apparatus embodiment or a system embodiment. In the descriptions of this application, unless otherwise specified, a plurality of means two or more than two. Therefore, for implementations of the apparatus and the method, reference may be made to each other, and repeated parts are not described again.

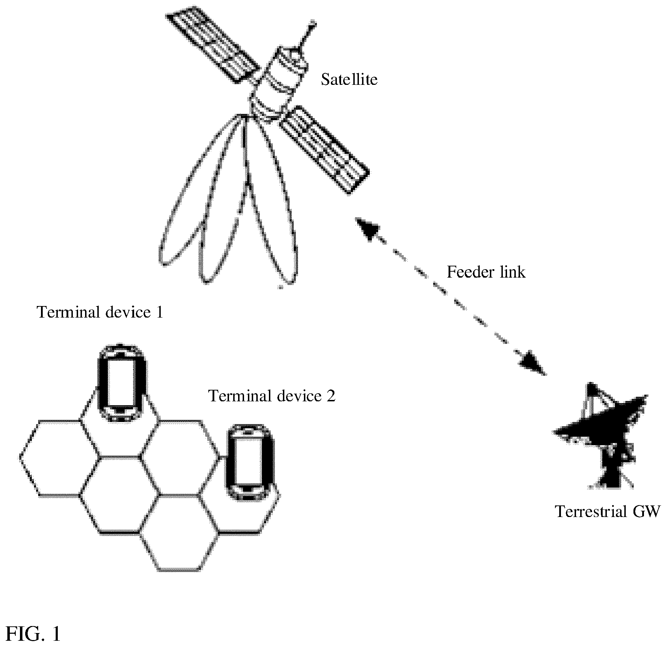

FIG. 1 is a schematic diagram of an architecture of a satellite mobile communication system to which an embodiment of this application may be applied. As shown in FIG. 1, the satellite mobile communication system includes a satellite, a terrestrial GW, and a terminal device. The satellite communicates with the terminal device (for example, a terminal device 1 and a terminal device 2 in a same cell) by using a radio signal. The satellite is wirelessly connected to the terrestrial GW, and the link is usually referred to as a feeder link. The satellite usually forms a plurality of beams, and each beam is similar to a cell/sector in a terrestrial mobile communication system (for example, LTE/NR).

The foregoing terrestrial GW may be understood as a network device, such as an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a radio relay node, a wireless backhaul node, a transmission point (transmission and reception point, TRP, or transmission point, TP), or the like, or may be a gNB in a 5G (for example, NR) system, or a transmission point (TRP or TP), or one or a group of antenna panels (including a plurality of antenna panels) of a base station in the 5G system, or may be a network node that forms a gNB or a transmission point, for example, a baseband unit (BBU), a DU, or an unmanned aerial vehicle.

In some deployments, a gNB may include a central unit (central unit, CU) and a DU. The gNB may further include a radio frequency unit (radio unit, RU). The CU implements some functions of the gNB, and the DU implements some functions of the gNB. For example, the CU implements functions of RRC and a packet data convergence layer protocol (packet data convergence protocol, PDCP) layer, and the DU implements functions of a radio link control (radio link control, RLC) layer, a media access control (media access control, MAC) layer, and a physical (physical, PHY) layer. Information of the RRC layer is finally changed to information of the PHY layer (that is, sent by using the PHY layer), or is converted from the information of the PHY layer. Therefore, in this architecture, higher layer signaling, for example, RRC-layer signaling or PDCP-layer signaling, may also be considered to be sent by the DU, or sent by the DU and the RU. It may be understood that the access network device may be a CU node, a DU node, or a device including a CU node and a DU node. In addition, the CU may be classified as a network device in an access network RAN, or the CU may be classified as a network device in a core network CN. This is not limited herein.

The terminal device in embodiments of this application may also be referred to as a terminal, and is an entity on a user side configured to receive or transmit a signal, and is configured to send an uplink signal to a network device, or receive a downlink signal from the network device. The terminal device includes a device that provides a user with voice and/or data connectivity, for example, may include a handheld device with a wireless connection function, or a processing device connected to a wireless modem. The terminal device may communicate with a core network through a radio access network (radio access network, RAN), and exchange a voice and/or data with the RAN. The terminal device may include UE, a V2X terminal device, a wireless terminal device, a mobile terminal device, a device-to-device (device-to-device, D2D) terminal device, a machine-to-machine/machine-type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), and a user terminal (user terminal), a user agent (user agent), or user equipment (user equipment), a wearable device, a vehicle-mounted device, an unmanned aerial vehicle, or the like.

If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board unit, OBU).

The satellite may be a geostationary satellite, a non-geostationary satellite, an artificial satellite, a low-orbit satellite, a medium-orbit satellite, a high-orbit satellite, or the like. This is not specifically limited in this application.

As described in the background, for the design of the TA, after discussion and analysis of a plurality of standard meetings, the TA is calculated according to the following formula 1 gradually:

$$T_{TA} = \left( N_{TA} + N_{TA,UE-\text{specfic}} + N_{TA,common} + N_{TA,\text{offset}} \right) \times T_C \qquad \text{Formula 1}$$

For a physical random access channel (physical random access channel, PRACH), $N_{TA}$ =0, updating of $N_{TA}$ is based on a TA carried in Msg2/MsgB and a TA of a media access control element (media access control control element, MAC CE). $N_{TA,UE\text{-specfic}}$ represents a TA estimated by the UE based on satellite ephemeris information and a location of the UE, to pre-compensate a delay of a data link. $N_{TA,common}$ is a common TA determined on a network device side. $N_{TA,offset}$ is a fixed offset. $T_C$ is a minimum time unit.

The network device needs to determine a reference point for calculation of $N_{TA,common}$. The reference point may be selected as the satellite itself, and in this case, $N_{TA,common}$ =0. The reference point may be a terrestrial GW, any point on the data link, or any point on the feeder link. Because the selected reference points are different and the satellite is constantly moving, when the different reference points are selected, $N_{TA,common}$ s are different at different moments. In addition, to ensure a requirement for a TA error, $N_{TA,common}$ needs to be frequently updated to ensure correct TA calculation. Generally, the satellite continuously calculates and broadcasts a parameter quantity of $N_{TA,common}$ , so that the terminal device determines the TA. Signaling overheads generated during broadcasting $N_{TA,common}$ depend on an update period of broadcasting and a parameter quantity associated with $N_{TA,common}$ for each time of broadcasting. If the update period is short, the parameter quantity that is associated with $N_{TA,common}$ and that is carried in each broadcast message is large, and signaling overheads are large.

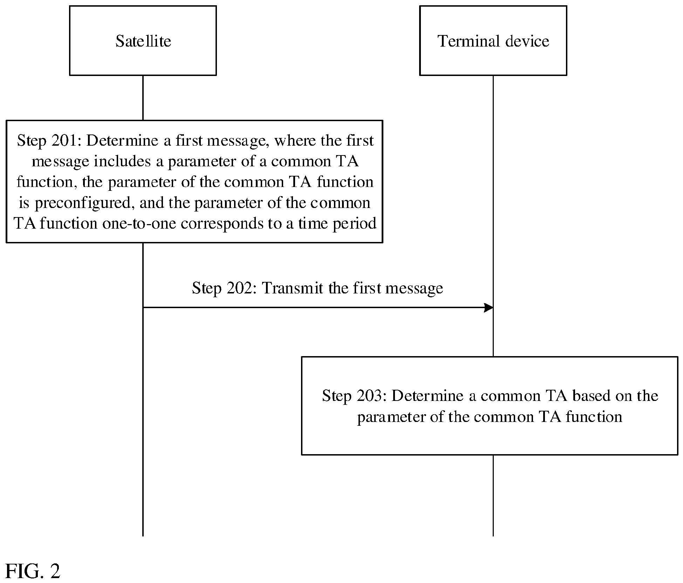

In view of this, this application provides a common TA determining method. The method may be implemented through interaction between a satellite and a terminal device. During actual application, there may be a plurality of terminal devices. One terminal device is used as an example herein for description. During execution, reference may be made to the flowchart shown in FIG. 2. Details are specifically as follows:

Step 201: The satellite determines a first message, where the first message includes a parameter of a common TA function, the parameter of the common TA function is preconfigured, and the parameter of the common TA function one-to-one corresponds to a time period.

It should be noted that the common TA function is determined based on satellite ephemeris information (indicating a satellite orbit parameter, where a satellite orbit of each satellite is fixed, but satellite orbits of different satellites may be different) and a location of a reference point (for example, a terrestrial GW). Different satellites correspond to different common TA functions, and a same satellite also determines different common TA functions when selecting different reference points. This is not specifically limited in this application. Communication between the satellite and the terminal device usually further needs to be implemented depending on a network device. Both the network device and the terminal device know a curve of the common TA function. The network device may calculate parameters of the common TA function corresponding to different time periods, determine parameters that are of the common TA function and that correspond to specific time periods, transmit the calculated parameters of the common TA function to the satellite, and send the calculated parameters of the common TA function to the terminal device via the satellite, so that the terminal device synchronizes with the satellite based on the parameters of the common TA function in the different time periods.

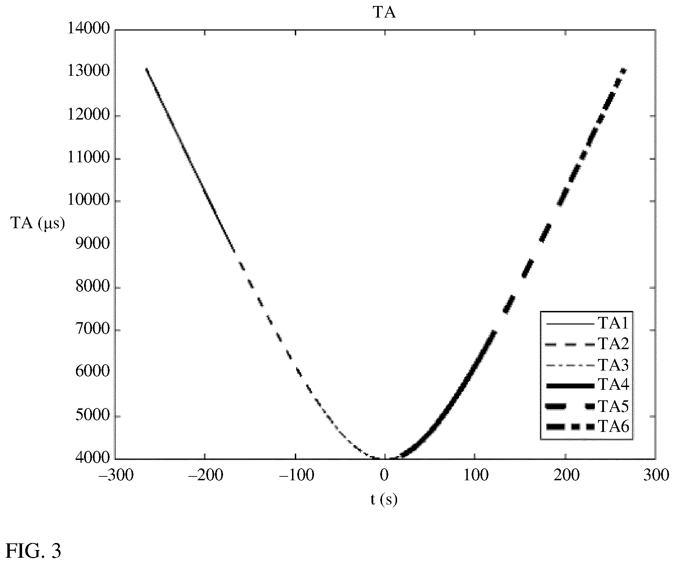

For example, the reference point is the terrestrial GW. The curve of the common TA function may be shown in FIG. 3. As time changes, a trend of the curve of the TA function when the satellite moves to different locations also changes. In FIG. 3, time of a horizontal coordinate actually indicates a location relationship between the satellite and a terrestrial cell. When t=0, the terrestrial cell is right below the satellite, and when t>0 or t<0, the terrestrial cell is not right below the satellite. Because the satellite may continuously approach the terrestrial cell, when the satellite approaches the terrestrial cell from a place far away from the terrestrial cell, a value of t is less than 0, and when the satellite gradually leaves the terrestrial cell from a location of t=0, the value of t is greater than 0. It should be noted that one terrestrial cell may include a plurality of terminal devices. The satellite may broadcast a same parameter of a common TA function for terminal devices in a same terrestrial cell, so that the terminal devices determine common TAs, or may broadcast different parameters of the common TA function for the terminal devices in the same terrestrial cell in different time periods. This is not specifically limited herein in this application. For example, when the satellite is far from the terminal device, for example, when t=-200s, a value of the common TA is 9000 μs. When the satellite is close to the terminal device, for example, when t=0s, the value of the common TA is 0 μs. Alternatively, when t=200s, the value of the common TA is 10000 μs. In FIG. 3, an example in which the curve of the common TA function is divided into six segments for fitting calculation is used. During actual application, a specific quantity of segments into which the curve of the common TA function is divided for fitting is not specifically limited. The specific quantity of segments to be divided into needs to be determined with reference to an orbital height of the satellite, a location of the reference point, and an elevation between the satellite and the terrestrial cell. This is not specifically limited in this application.

In addition, parameters that are of the common TA function and that correspond to all curve segments may be understood as the same, and each curve segment corresponds to one time period. For example, in FIG. 3, a curve 1 (TA1) corresponds to a time period 1, a curve 2 (TA1) corresponds to a time period 2, a curve 3 (TA1) corresponds to a time period 3, a curve 4 (TA1) corresponds to a time period 4, a curve 5 (TA1) corresponds to a time period 5, and a curve 6 (TA1) corresponds to a time period 6. The satellite may send a same parameter in one time period, and the terminal device may determine the value of the common TA based on a current timestamp. In this application, a common TA parameter is determined by fitting the common TA function based on a curve of the common TA function in a period of time, and is not fitted in real time (for example, fitting is performed by using a value and a derivative of the common TA at a moment). A calculation frequency of real-time fitting is high, and data processing is frequent. However, in this application, a data processing amount is reduced by fitting the common TA function by segment.

The parameters of the common TA function may correspond to time periods with reference to Table 1 below. Time lengths may be the same, or may be different, or may be partially the same. This is not specifically limited herein in this application, and may be flexibly adjusted based on an actual requirement. Table 1 is described by using an example in which the time period can be flexibly adjusted. Common TA parameters corresponding to a time period 1 (0S to 20S) are a1, b1, and c1, common TA parameters corresponding to a time period 2 (20S to 40S) are a2, b2, and c2, common TA parameters corresponding to a time period 3 (40S to 70S) are a2, b2, and c2, and common TA parameters corresponding to a time period 4 (70S to 80S) are a3, b3, and c3, which are not illustrated one by one herein. During actual application, only one or more rows of Table 1 may be applied. This is not specifically limited in this application.

**Table 1**

| Time period | Common TA parameter |
| --- | --- |
| Time period 1 | a1, b1, c1 |
| Time period 2 | a2, b2, c2 |
| Time period 3 | a2, b2, c2 |
| Time period 4 | a3, b3, c3 |
| ... | ... |

Step 202: The satellite transmits the first message to the terminal device. Correspondingly, the terminal device may obtain the first message.
It should be noted that generally, the satellite communicates with a plurality of terminal devices. After receiving a common TA parameter transmitted by the network device, the satellite may send the first message to each terminal device in a broadcast manner. After receiving the first message, the terminal device may determine a timing advance based on information about the common TA parameter in the first message, and synchronize with the satellite based on the timing advance. The first message may be further understood as a configuration message, and the terminal device may determine, based on the message, how to configure the common TA.
Step 203: The terminal device determines a common TA based on the parameter of the common TA function.
In this application, the parameter of the common TA function is preconfigured, one-to-one corresponds to the time period, and is not determined through real-time calculation. Updating of the parameter of the common TA function is also associated with the time period. A longer update period indicates lower signaling overheads. In addition, data processing efficiency can be improved by performing synchronization according to the common TA determining method.
A time interval of the time period may be fixed (for example, 20s), or may be flexibly changed based on an actual requirement. This is not specifically limited in this application. When the time period is flexibly set, the time period indicates a time interval between updating the parameter of the common TA function for an N<sup>th</sup> time and updating the parameter of the common TA function for an (N+1)<sup>th</sup> time, and N is a positive integer. The time period is related to a satellite elevation, and different satellite elevations correspond to different lengths of the time period.

It should be noted that, during actual application, the parameter of the common TA function does not always remain unchanged, but needs to be updated. For example, if a time interval between updating the parameter of the first common TA function for a 1st time and updating the parameter of the second common TA function for a 2nd time is 20 seconds, the time period may be 20s. This is merely an example and is not specifically limited herein. Generally, the satellite elevation indicates an included angle between the satellite, the terminal device, and a horizontal plane. A smaller included angle indicates a longer distance between the satellite and the terminal device, a longer time period, and a longer update period of the parameter of the common TA function. A larger included angle indicates a shorter distance between the satellite and the terminal device, a shorter time period, and a shorter update period of the parameter of the common TA function. Specifically, the satellite broadcasts different parameters of the common TA function for different cells in a coverage area. For a cell with a large satellite elevation, the satellite performs broadcasting in a short time period. For a cell with a small satellite elevation, the satellite performs broadcasting in a long time period. During actual application, a value of a preset angle may be determined with reference to a type of the satellite. For example, preset angles are 40° and 70°. When the satellite elevation is less than 40°, the time period 1 is used to update the parameter of the common TA function. When the satellite elevation is greater than 40° and less than 70°, the time period 2 is used to update the parameter of the common TA function. When the satellite elevation is greater than 70°, the time period 3 is used to update the parameter of the common TA function. The time period 1 is the longest, the time period 2 is the second, and the time period 3 is the smallest. In this manner, the update period of the parameter of the common TA function is flexibly adjusted, so that signaling overheads can be reduced.

In addition, when a value of the common TA at a moment is determined by using the derivative of the common TA, the value of the common TA may not be updated in real time, or an update period of the common TA may be flexibly set based on the satellite elevation. For example, when the value of the common TA is determined by referring to the following formula 2 or formula 3, a timer may be set, different timer duration is set for different elevations, and the common TA is calculated only after time set by the timer is reached, and the update period of the common TA is prolonged in this manner, thereby reducing signaling overheads.

$$N_{TA,common}\left(t\right) = N_{TA,common}\left(t_0\right) + TA_{commondrift,to} \times \left(t - t_0\right) \qquad \text{Formula 2}$$

$$N_{TA,common}\left(t\right) = N_{TA,common}\left(t_0\right) + TA_{commondrift,to} \times \left(t - t_0\right) \\ + \tfrac{1}{2}TA_{commondrift\_variation\_rate,to} \times \left(t - t_0\right)^2 \qquad \text{Formula 3}$$

$N_{TA,common}(t)$ indicates a value of the common TA at a moment $t$, $N_{TA,common}(t_0)$ indicates a value of the common TA at a moment $t0$, $TA_{commondrift,to}$ indicates a first-order derivative of the common TA at the moment $t0$, and $TA_{commondrift\_variation\_rate,to}$ indicates a second-order derivative of the common TA at the moment $t0$.

In an optional manner, the satellite may send indication information, and the indication information may indicate an order of the common TA function. Correspondingly, the terminal device may receive the indication information, and determine the common TA based on the parameter of the common TA function and the order of the common TA function. The indication information may be included in the first message, and the order of the common TA function may also be directly carried in the parameter of the common TA function sent by the satellite. In this manner, signaling resources can be saved. However, during actual application, the indication information may also be carried in another message or signaling, and is not carried in the first message. In this manner, the order of the common TA function may be flexibly indicated. A manner of carrying the indication information is not specifically limited herein in this application.

The indication information is carried by using the following signaling: a SIB or an MIB. The common TA is a delay between the satellite and the reference point, and users in a cell are covered by a same satellite. Therefore, the common TA is the same, that is, the common TA may be sent to each user in the cell in a broadcast manner. Therefore, the common TA may be carried by using a broadcast message, for example a SIB or an MIB. In addition, the common TA needs to be obtained before random access, and is used for timing advance of sending a random access preamble by the user. Therefore, the common TA needs to be carried in the broadcast message.

For example, two bits in the SIB indicate the order of the common TA function. During actual application, another quantity of bits may also be used to indicate the order. This is not specifically limited in this application. As shown in Table 2, for example, 00 indicates that the order is 1, 01 indicates that the order is 2, 10 indicates that the order is 3, and 11 indicates that the order is 4. For example, when the satellite broadcasts 11, the terminal device may learn, by querying Table 2, that a corresponding order of the common TA function is 4. During actual application, only one or more rows of Table 2 may be applied. This is not specifically limited in this application. In addition, it should be further noted that when the order is 2, the common TA is equivalent to a second-order function. $at^2 + bt + c$, where $a$ is equivalent

to $\dfrac{1}{2} TA_{commondrift\_variation\_rate,to}$ , $b$ is equivalent to $TA_{commondrift,to} - t_0 \times TA_{commondrift\_variation\_rate,to}$, and $C$ is equivalent to $\left(t_0\right)^2 \times \dfrac{1}{2} TA_{commondrift\_variation\_rate,to} - t_0 \times TA_{commondrift,to} + N_{TA,common}\left(t_0\right)$

. Further, when $t_0 = 0$, $a$ is equivalent to $\dfrac{1}{2} TA_{commondrift\_variation\_rate,to}$ , $b$ is equivalent to $TA_{commondrift,to}$, and $C$ is equivalent to $N_{TA,common}(t_0)$.

**Table 2**

| Bit | Order of a common TA function |
|-----|-------------------------------|
| 00  | 1                             |
| 01  | 2                             |
| 10  | 3                             |
| 11  | 4                             |

Refer to Table 2. If the indication information received by the terminal device in the time period 1 is 00, it can be learned that the order of the common TA function is 1, and the value of the common TA may be determined by using the parameters b1 and c1 that are of the common TA function and that correspond to the time period 1 in Table 1. Alternatively, when Table 2 is known, only a corresponding parameter is indicated, but not all parameters are indicated. As shown in the following Table 3, for example, 00 indicates that the order is 1, and the parameters of the common TA are b 1 and c 1; 10 indicates that the order is 3, and the parameters of the common TA are a3, b3, c3, and d3, and the like, which are not shown one by one herein. For example, when the satellite broadcasts 00, the terminal device may learn, by querying Table 3, that a corresponding order of the common TA function is 1, and the parameters of the common TA are b1 and c1. During actual application, only one or more rows of Table 3 may be applied. This is not specifically limited in this application.

**Table 3**

| Bit | Order of a common TA function | Common TA parameter |
|-----|-------------------------------|---------------------|
| 00  | 1                             | b1, c1              |
| 01  | 2                             | a2, b2, c2          |
| 10  | 3                             | a3, b3, c3, d3      |
| 11  | 4                             | a4, b4, c4, d4, c4  |

In addition, because a higher order of the common TA function corresponds to a larger quantity of parameters, the update period of the common TA is also longer.

It should be noted that TA functions corresponding to the different time periods may be different. An order of the common TA function in a time period is indicated by the indication information, so that the terminal device quickly determines parameters that are of the common TA function and that are to be used to determine the common TA. In this manner, data processing efficiency can be improved.

In an optional manner, an index value may indicate a value of the parameter of the common TA function. For example, a parameter a is used as an example. The satellite broadcasts integer values from 1 to N, to achieve an effect of broadcasting a. On the terminal device side, when receiving a value n, the terminal device may obtain a specific value of a according to a mapping table. Similarly, similar tables may also be maintained for parameters b and c. Values of the parameters a, b, and c vary with different orbital heights of the satellite. Therefore, the UE can maintain a plurality of tables. In each table, n corresponds to a, and different orbital heights also vary. However, the satellite only needs to broadcast the value n and orbital height information of the satellite. The UE searches a table under the orbital height based on the orbital height, and then obtains the value of the parameter a based on the value n. As shown in the following Table 4, when the index value is 1, corresponding a is A1. When the index value is 3, corresponding a is A3. For example, when the satellite broadcasts the index 3, the terminal device may learn, by querying Table 4, that a corresponding value of the parameter a of the common TA is A3. During actual application, only one or more rows of Table 4 may be applied. This is not specifically limited in this application. Herein, only the parameter a is used as an example. During actual application, the satellite and the terminal device may further maintain tables corresponding to other parameters and index values, which are not shown one by one herein.

**Table 4**

| Index | Value of a common TA parameter a |
| --- | --- |
| 1 | A1 |
| 2 | A2 |
| 3 | A3 |
| ... | ... |

During actual application, values of a plurality of common TA parameters may be indicated by index values. As shown in Table 5, when the index value is 1, corresponding a is A1, and corresponding b is B2. When the index value is 3, corresponding a is A3, and corresponding b is B1. For example, when the satellite broadcasts the index 3, the terminal device may learn, by querying Table 5, that a corresponding value of the parameter a of the common TA is A3, and a value of b is B1. During actual application, only one or more rows of Table 5 may be applied. This is not specifically limited in this application.

Table 5

| Index | Values of common TA parameters a and b |
| --- | --- |
| 1 | A1, B2 |
| 2 | A2, B3 |
| 3 | A3, B1 |
| ... | ... |

During actual application, one or more values of the common TA parameter may be further jointly indicated by the index value and the time period. In the following Table 6, only one value of the common TA parameter is indicated as an example for description. When the time period is 1 and the index value is 1, corresponding a is A1. When the time period is 3 and the index value is 2, corresponding a is A2. For example, when the satellite broadcasts the index 3 in the time period 2, the terminal device may learn, by querying Table 6, that a corresponding value of the parameter a of the common TA in the time period 2 is A3. During actual application, only one or more rows of Table 6 may be applied. This is not specifically limited in this application.

**Table 6**

| Time period | Index | Value of a common TA parameter a |
| --- | --- | --- |
| Time period 1 | 1 | A1 |
| Time period 1 | 2 | A2 |
| Time period 2 | 3 | A3 |
| Time period 2 | 1 | A1 |
| Time period 3 | 2 | A2 |
| Time period 4 | 3 | A3 |
| Time period 4 | 4 | A4 |
|  | ... | ... |

In addition, it should be further noted that the value of the common TA parameter may be indicated by a value of a bit. For example, when two bits are used for indication, when common TA parameters include a, b, and c, specific values of a, b, and c may be represented by using 00, 10, 01, 11, and the like. As shown in Table 7, when the index value is 1, corresponding a is 00, corresponding b is 11, and corresponding c is 10. When the index value is 3, corresponding a is 01, corresponding b is 01, and corresponding c is 01. For example, when the satellite broadcasts the index 3, the terminal device may learn, by querying Table 7, that a corresponding parameter a of the common TA is 01, a corresponding parameter b of the common TA is 01, and a corresponding parameter c of the common TA is 01. During actual application, only one or more rows of Table 7 may be applied. This is not specifically limited in this application.

**Table 7**

| Index | Value of a common TA parameter a | Value of a common TA parameter b | Value of a common TA parameter c |
|---|---|---|---|
| 1 | 00 | 11 | 10 |
| 2 | 10 | 10 | 10 |
| 3 | 01 | 01 | 01 |
| 4 | 11 | 00 | 01 |
| 5 | 01 | 00 | 10 |
| ... | ... | ... | ... |

In addition, it should be further noted that the value of the common TA parameter may be indicated by different bits. For a more important parameter, more bits are used for indication, and for a less important parameter, fewer bits are used for indication. For example, when common TA parameters include a, b, and c, three bits are used for indication for the high-order parameter a, and two bits are used for indication for the low-order parameters b and c. As shown in the following Table 8, when the index value is 1, corresponding a is 001, corresponding b is 11, and corresponding c is 10. When the index value is 3, corresponding a is 011, corresponding b is 01, and corresponding c is 01. For example, when the satellite broadcasts the index 3, the terminal device may learn, by querying Table 8, that a corresponding parameter a of the common TA is 011, a corresponding parameter b of the common TA is 01, and a corresponding parameter c of the common TA is 01. During actual application, only one or more rows of Table 8 may be applied. This is not specifically limited in this application.

**Table 8**

| Index | Value of a common TA parameter a | Value of a common TA parameter b | Value of a common TA parameter c |
|---|---|---|---|
| 1 | 001 | 11 | 10 |
| 2 | 110 | 10 | 10 |
| 3 | 011 | 01 | 01 |
| 4 | 110 | 00 | 01 |
| 5 | 101 | 00 | 10 |
| ... | ... | ... | ... |

In addition, it should be further noted that the terminal device may store a value of the most recently updated common TA parameter, the satellite may broadcast an increment value of the most recently broadcast common TA parameter, and the terminal device superimposes the increment value and the value of the most recently updated common TA parameter to determine a value that is of the common TA parameter and that is required by the current timestamp. The increment broadcasted by the satellite may be indicated by the index value, or a specific value added to the common TA parameter may be directly broadcast. This is not specifically limited in this application.

It should be noted that the terminal device and the network device may maintain a same table. The table may include the index value and the value of the parameter of the TA function. The value of the parameter of the common TA function is indicated in an index manner, to avoid that a large amount of data is carried when the first message is broadcast. In this manner, a data sending amount can be reduced, and when the data sending amount is reduced, signaling overheads can be reduced, and communication efficiency can be improved.

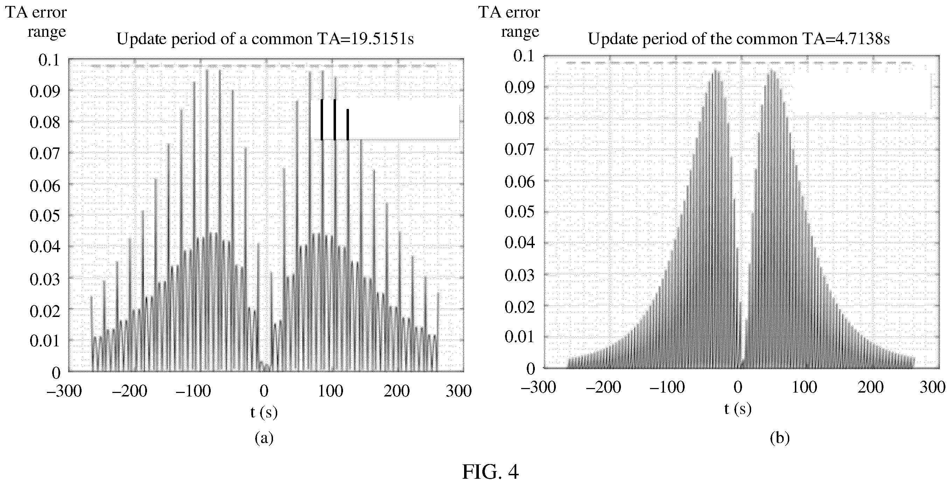

When the common TA is determined by using the method in this application, that the parameters of the common TA function include a, b, and c is used as an example, (a) in FIG. 4 is obtained through simulation. In an allowable TA error range, an update period of the common TA is 19.515s. In other words, the satellite updates the three parameters a, b, and c every 19.5151s. Compared with a solution in which a first-order derivative, a second-order derivative, or a multi-order derivative is used, this method has an obviously longer update period. The simulation diagram using the first-order derivative and the second-order derivative is shown in (b) in FIG. 4. The satellite updates three parameters that are the common TA and update periods of the first-order derivative and the second-order derivative of the common TA every 4.7138s, and the update period is short.

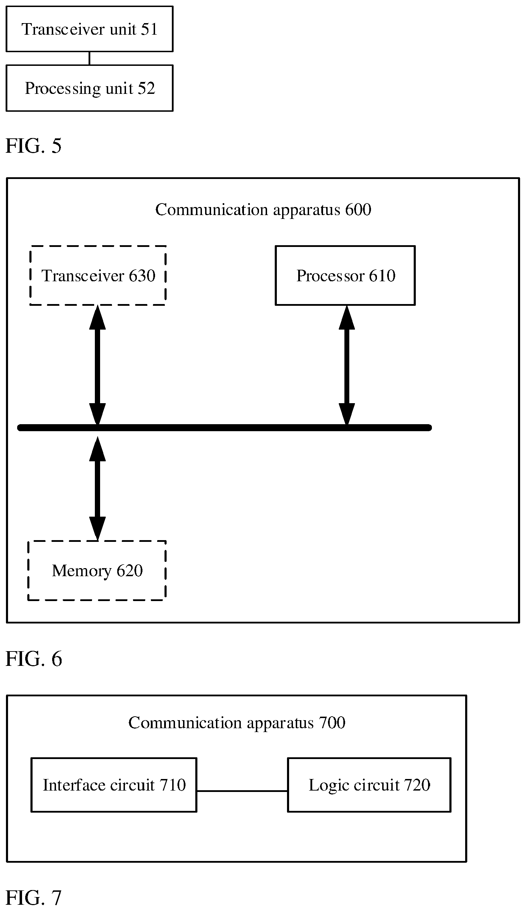

Based on a same idea, this application provides a communication apparatus. As shown in FIG. 5, the communication apparatus includes a transceiver unit 51 and a processing unit 52. The communication apparatus may be understood as a terminal device, or may be understood as a satellite. This is not specifically limited in this application. It should be understood that the transceiver unit may be referred to as a transceiver unit, a communication unit, or the like. When the communication apparatus is a terminal device or a satellite, the transceiver unit may be a transceiver, and the processing unit may be a processor. When the communication apparatus is a module (for example, a chip) in the terminal device or the satellite, the transceiver unit may be an input/output interface, an input/output circuit, an input/output pin, or the like, and may also be referred to as an interface, a communication interface, an interface circuit, or the like. The processing unit may be a processor, a processing circuit, a logic circuit, or the like.

When the communication apparatus is the terminal device, the transceiver unit 51 is configured to obtain a first message. The first message includes a parameter of a common TA function, the parameter of the common TA function is preconfigured, and the parameter of the common TA function one-to-one corresponds to a time period. The processing unit 52 is configured to determine a common TA based on the parameter of the common TA function.

When the communication apparatus is the satellite, the processing unit 52 is configured to determine a first message. The first message includes a parameter of a common TA function, the parameter of the common TA function is preconfigured, and the parameter of the common TA function one-to-one corresponds to a time period. The transceiver unit 51 is configured to transmit the first message.

It should be noted that the common TA function is determined based on satellite ephemeris information (indicating a satellite orbit parameter, where a satellite orbit of each satellite is fixed, but satellite orbits of different satellites may be different) and a location of a reference point (for example, a terrestrial GW). Different satellites correspond to different common TA functions, and a same satellite also determines different common TA functions when selecting different reference points. This is not specifically limited in this application. Communication between the satellite and the terminal device usually further needs to be implemented depending on a network device. Both the network device and the terminal device know a curve of the common TA function. The network device may calculate parameters of the common TA function corresponding to different time periods, transmit the calculated parameters of the common TA function to the satellite, and send the calculated parameters of the common TA function to the terminal device via the satellite, so that the terminal device synchronizes with the satellite based on the parameters of the common TA function in the different time periods.

Generally, the satellite communicates with a plurality of terminal devices. After receiving a common TA parameter transmitted by the network device, the satellite may send the first message to each terminal device in a broadcast manner. After receiving the first message, the terminal device may determine a timing advance based on information about the common TA parameter in the first message, and synchronize with the satellite based on the timing advance. The first message may be further understood as a configuration message, and the terminal device may determine, based on the message, how to configure the common TA.

In this application, the parameter of the common TA function is preconfigured, one-to-one corresponds to the time period, and is not determined through real-time calculation. Updating of the parameter of the common TA function is also associated with the time period. A longer update period indicates lower signaling overheads. In addition, data processing efficiency can be improved by performing synchronization according to the common TA determining method.

In an optional manner, the first message further includes indication information, and the indication information indicates an order of the common TA function.

In an optional manner, the processing unit 52 of the terminal device is specifically configured to determine the common TA based on the parameter of the common TA function and the order of the common TA function. It should be noted that the first message may also be directly sent by the satellite, and is not carried in the first message, and is carried by using other information or signaling. A carrying manner of the first message is not specifically limited herein in this application. TA functions corresponding to the different time periods may be different. An order of the common TA function in a time period is indicated by the indication information, so that the terminal device quickly determines parameters that are of the common TA function and that are to be used to determine the common TA. In this manner, data processing efficiency can be improved.

In an optional manner, the indication information may be carried by using the following signaling: a SIB or an MIB.

In an optional manner, an index value indicates a value of the parameter of the common TA function. It should be noted that the terminal device and the network device may maintain a same table. The table may include the index value and the value of the parameter of the TA function. For example, after the satellite broadcasts an index 1 based on the first message, the terminal device may learn, based on the maintained table, that parameters corresponding to the index 1 are a1, b1, and c1, and may determine the common TA based on a1, b1, and c1. The value of the parameter of the common TA function is indicated in an index manner, to avoid that a large amount of data is carried when the first message is broadcast. In this manner, a data sending amount can be reduced, and when the data sending amount is reduced, signaling overheads can be reduced, and communication efficiency can be improved.

In an optional manner, the time period indicates a time interval between updating the parameter of the common TA function for an $N^{th}$ time and updating the parameter of the common TA function for an $(N+1)^{th}$ time, and N is a positive integer. The time period is related to a satellite elevation, and different satellite elevations correspond to different lengths of the time period.

It should be noted that, during actual application, the parameter of the common TA function does not always remain unchanged, but needs to be updated. For example, if a time interval between updating the parameter of the first common TA function for a $1^{st}$ time and updating the parameter of the second common TA function for a $2^{nd}$ time is 20 seconds, the time period may be 20 seconds. This is merely an example and is not specifically limited herein. Generally, the satellite elevation indicates an included angle between the satellite, the terminal device, and a horizontal plane. A smaller included angle indicates a longer distance between the satellite and the terminal device, a longer time period, and a longer update period of the parameter of the common TA function. A larger included angle indicates a shorter distance between the satellite and the terminal device, a shorter time period, and a shorter update period of the parameter of the common TA function. In this manner, the update period of the parameter of the common TA function is flexibly adjusted, so that signaling overheads can be reduced. Specifically, the satellite broadcasts different parameters of the common TA function for different cells in a coverage area. For a cell with a large satellite elevation, the satellite performs broadcasting in a short time period. For a cell with a small satellite elevation, the satellite performs broadcasting in a long time period.

In addition, as shown in FIG. 6, this application further provides a communication apparatus 600. For example, the communication apparatus 600 may be a chip or a chip system. Optionally, in embodiments of this application, the chip system may include a chip, or may include the chip and another discrete device.

The communication apparatus 600 may include at least one processor 610, and the communication apparatus 600 may further include at least one memory 620 configured to store a computer program, program instructions, and/or data. The memory 620 is coupled to the processor 610. The coupling in embodiments of this application may be an indirect coupling or a communication connection between apparatuses, units, or modules in an electrical form, a mechanical form, or another form, and is used for information exchange between the apparatuses, the units, or the modules. The processor 610 may perform an operation in cooperation with the memory 620. The processor 610 may execute the computer program stored in the memory 620. Optionally, the at least one memory 620 may also be integrated with the processor 610.

Optionally, during actual application, the communication apparatus 600 may include a transceiver 630 or may not include the transceiver 630 and a memory 620. A dashed box is used as an example in the figure. The communication apparatus 600 may exchange information with another device by using the transceiver 630. The transceiver 630 may be a circuit, a bus, a transceiver, or any other apparatus that may be configured to exchange information.

In a possible implementation, the communication apparatus 600 may be used in the foregoing terminal device, may be the foregoing satellite, or may be the foregoing network device. The memory 620 stores a computer program, program instructions, and/or data necessary for implementing a function of the relay device in any one of the foregoing embodiments. The processor 610 may execute the computer program stored in the memory 620, to complete the method in any one of the foregoing embodiments.

A specific connection medium between the transceiver 630, the processor 610, and the memory 620 is not limited in embodiments of this application. In embodiments of this application, the memory 620, the processor 610, and the transceiver 630 are connected through a bus in FIG. 6. The bus is represented by using a thick line in FIG. 6. A manner of connection between other components is merely an example for description, and imposes no limitation. The bus may be classified into an address bus, a data bus, a control bus, and the like. For ease of indication, the bus is indicated by only one bold line in FIG. 6. However, it does not indicate that there is only one bus or only one type of bus. In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be configured to carry or store expected program code in a form of an instruction or a data structure and that can be accessed by a computer, but is not limited thereto. Alternatively, the memory in embodiments of this application may be a circuit or any other apparatus that can implement a storage function, and is configured to store a computer program, program instructions, and/or data.

Based on the foregoing embodiments, refer to FIG. 7, embodiments of this application further provide another communication apparatus 700, including an interface circuit 710 and a logic circuit 720. The interface circuit 710 may be understood as an input/output interface, and may be configured to perform the same operation steps as those of the transceiver unit shown in FIG. 5 or the transceiver shown in FIG. 6. Details are not described herein again in this application. The logic circuit 720 may be configured to run code instructions to perform the method in any one of the foregoing embodiments, and may be understood as the processing unit in FIG. 5 or the processor in FIG. 6, and may implement the same function as the processing unit or the processor. Details are not described herein again in this application.

Based on the foregoing embodiments, an embodiment of this application further provides a readable storage medium. The readable storage medium stores instructions. When the instructions are executed, the common timing advance TA determining method in any one of the foregoing embodiments is implemented. The readable storage medium may include any medium that can store program code, such as a USB flash drive, a removable hard disk, a read-only memory, a random access memory, a magnetic disk, or an optical disc.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or the block diagrams of the method, the apparatus (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing apparatus to generate a machine, so that the instructions executed by a computer or the processor of any other programmable data processing apparatus generate an apparatus for implementing a specific function in one or more procedures in the flowcharts and/or in one or more blocks in the block diagrams.

These computer program instructions may be alternatively stored in a computer-readable memory that can indicate the computer or another programmable data processing apparatus to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing apparatus, so that a series of operation steps are performed on the computer or another programmable apparatus to generate computer-implemented processing. Therefore, the instructions executed on the computer or another programmable apparatus provide steps for implementing a specific function in one or more procedures in the flowcharts and/or in one or more blocks in the block diagrams.

**Claims**

1. A common timing advance TA determining method, used in a terminal device, comprising:

   obtaining a first message, wherein the first message comprises a parameter of a common TA function, the parameter of the common TA function is preconfigured, and the parameter of the common TA function one-to-one corresponds to a time period; and
   determining a common TA based on the parameter of the common TA function.

2. The method according to claim 1, wherein the first message further comprises indication information, and the indication information indicates an order of the common TA function.

3. The method according to claim 2, wherein the determining a common TA based on the parameter of the common TA function comprises:
determining the common TA based on the parameter of the common TA function and the order of the common TA function.

4. The method according to any one of claims 1 to 3, wherein the common TA is determined according to the following formula:

$$N_{TA,common}\left(t\right) = N_{TA,common}\left(t_0\right) + TA_{commondrift,to} \times \left(t - t_0\right)$$
$$+ \frac{1}{2}TA_{commondrift\_variation\_rate,to} \times \left(t - t_0\right)^2 \quad ,$$

wherein
$N_{TA,common}(t)$ indicates a value of the common TA at a moment $t$, $N_{TA,common}(t_0)$ indicates a value of the common TA at a moment $t0$, $TA_{commondrift,to}$ indicates a first-order derivative of the common TA at the moment $t0$, and $TA_{commondrift\_variation\_rate,to}$ indicates a second-order derivative of the common TA at the moment $t0$.

5. The method according to claim 4, wherein an update period of the common TA is set based on a satellite elevation.

6. The method according to claim 4 or 5, wherein the order of the common TA function is 2.

7. The method according to claim 6, wherein the common TA function is indicated according to the following formula:

$$N_{TA,common}\left(t\right) = at^2 + bt + c,$$

wherein $a$ indicates $\frac{1}{2}TA_{commondrift\_variation\_rate,to}$, $b$ indicates

$TA_{commondrift,to} - t_0 \times TA_{commondrift\_variation\_rate,to}$, and $c$ indicates

$$\left(t_0\right)^2 \times \frac{1}{2}TA_{commondrift\_variation\_rate,to} - t_0 \times TA_{commondrift,to} + N_{TA,common}\left(t_0\right).$$

8. The method according to any one of claims 2 to 7, wherein the indication information is carried by using the following signaling:
a system information block SIB or a master information block MIB.

9. The method according to any one of claims 1 to 8, wherein an index value indicates a value of the parameter of the common TA function.

10. The method according to any one of claims 1 to 9, wherein the time period indicates a time interval between updating the parameter of the common TA function for an $N^{th}$ time and updating the parameter of the common TA function for an $(N+1)^{th}$ time, and N is a positive integer; and
the time period is related to the satellite elevation, and different satellite elevations correspond to different lengths of the time period.

11. A common timing advance TA determining method, used on a satellite, comprising:

determining a first message, wherein the first message comprises a parameter of a common TA function, the parameter of the common TA function is preconfigured, and the parameter of the common TA function one-to-one corresponds to a time period; and

transmitting the first message.

12. The method according to claim 11, wherein the first message further comprises indication information, and the indication information indicates an order of the common TA function.

13. The method according to claim 11 or 12, wherein a common TA is determined according to the following formula:

$$N_{TA,common}(t) = N_{TA,common}(t_0) + TA_{commondrift,to} \times (t - t_0)$$
$$+ \frac{1}{2} TA_{commondrift\_variation\_rate,to} \times (t - t_0)^2$$

wherein

$N_{TA,common}(t)$ indicates a value of the common TA at a moment $t$, $N_{TA,common}(t_0)$ indicates a value of the common TA at a moment $t0$, $TA_{commondrift,to}$ indicates a first-order derivative of the common TA at the moment $t0$, and $TA_{commondrift\_variation\_rate,to}$ indicates a second-order derivative of the common TA at the moment $t0$.

14. The method according to claim 13, wherein an update period of the common TA is set based on a satellite elevation.

15. The method according to claim 13 or 14, wherein the order of the common TA function is 2.

16. The method according to claim 15, wherein the common TA function is indicated according to the following formula:

$$N_{TA,common}(t) = at^2 + bt + c,$$

wherein $a$ indicates $\frac{1}{2} TA_{commondrift\_variation\_rate,to}$, $b$ indicates

$TA_{commondrift,to} - t_0 \times TA_{commondrift\_variation\_rate,to}$, and $c$ indicates

$(t_0)^2 \times \frac{1}{2} TA_{commondrift\_variation\_rate,to} - t_0 \times TA_{commondrift,to} + N_{TA,common}(t_0).$

17. The method according to any one of claims 12 to 16, wherein the indication information is carried by using the following signaling:
a system information block SIB or a master information block MIB.

18. The method according to any one of claims 11 to 17, wherein an index value indicates a value of the parameter of the common TA function.

19. The method according to any one of claims 11 to 18, wherein the time period indicates a time interval between updating the parameter of the common TA function for an $N^{th}$ time and updating the parameter of the common TA function for an $(N+1)^{th}$ time, and N is a positive integer; and
the time period is related to the satellite elevation, and different satellite elevations correspond to different lengths of the time period.

20. A communication apparatus, comprising:

a transceiver unit, configured to obtain a first message, wherein the first message comprises a parameter of a common timing advance TA function, the parameter of the common TA function is preconfigured, and the parameter of the common TA function one-to-one corresponds to a time period; and
a processing unit, configured to determine a common TA based on the parameter of the common TA function.

21. The apparatus according to claim 20, wherein the first message further comprises indication information, and the indication information indicates an order of the common TA function.

22. The apparatus according to claim 21, wherein the processing unit is specifically configured to:
determine the common TA based on the parameter of the common TA function and the order of the common TA function.

23. The apparatus according to any one of claims 20 to 22, wherein the common TA is determined according to the following formula:

$$N_{TA,common}\left(t\right) = N_{TA,common}\left(t_0\right) + TA_{commondrift,to} \times \left(t - t_0\right)$$
$$+ \frac{1}{2}TA_{commondrift\_variation\_rate,to} \times \left(t - t_0\right)^2 \quad ,$$

wherein
$N_{TA,common}(t)$ indicates a value of the common TA at a moment $t$, $N_{TA,common}(t_0)$ indicates a value of the common TA at a moment $t0$, $TA_{commondrift,to}$ indicates a first-order derivative of the common TA at the moment $t0$, and $TA_{commondrift\_variation\_rate,to}$ indicates a second-order derivative of the common TA at the moment $t0$.

24. The apparatus according to claim 23, wherein an update period of the common TA is set based on a satellite elevation.

25. The apparatus according to claim 23 or 24, wherein the order of the common TA function is 2.

26. The apparatus according to claim 25, wherein the common TA function is indicated according to the following formula:

$$N_{TA,common}\left(t\right) = at^2 + bt + c \,,$$

wherein $a$ indicates $\frac{1}{2}TA_{commondrift\_variation\_rate,to}$, $b$ indicates

$TA_{commondrift,to} - t_0 \times TA_{commondrift\_variation\_rate,to}$, and $c$ indicates

$\left(t_0\right)^2 \times \frac{1}{2}TA_{commondrift\_variation\_rate,to} - t_0 \times TA_{commondrift,to} + N_{TA,common}\left(t_0\right).$

27. The apparatus according to any one of claims 21 to 26, wherein the indication information is carried by using the following signaling:
a system information block SIB or a master information block MIB.

28. The apparatus according to any one of claims 20 to 27, wherein an index value indicates a value of the parameter of the common TA function.

29. The apparatus according to any one of claims 20 to 28, wherein the time period indicates a time interval between updating the parameter of the common TA function for an Nth time and updating the parameter of the common TA function for an (N+1)th time, and N is a positive integer; and
the time period is related to the satellite elevation, and different satellite elevations correspond to different lengths of the time period.

30. A communication apparatus, comprising:

a processing unit, configured to determine a first message, wherein the first message comprises a parameter of a common timing advance TA function, the parameter of the common TA function is preconfigured, and the parameter of the common TA function one-to-one corresponds to a time period; and
a transceiver unit, configured to transmit the first message.

31. The apparatus according to claim 30, wherein the first message further comprises indication information, and the indication information indicates an order of the common TA function.

32. The apparatus according to claim 30 or 31, wherein a common TA is determined according to the following formula:

$$N_{TA,common}\left(t\right) = N_{TA,common}\left(t_0\right) + TA_{commondrift,to} \times \left(t - t_0\right)$$
$$+ \tfrac{1}{2} TA_{commondrift\_variation\_rate,to} \times \left(t - t_0\right)^2 \quad,$$

wherein
$N_{TA,common}(t)$ indicates a value of the common TA at a moment $t$, $N_{TA,common}(t_0)$ indicates a value of the common TA at a moment $t0$, $TA_{commondrift,to}$ indicates a first-order derivative of the common TA at the moment $t0$, and $TA_{commondrift\_variation\_rate,to}$ indicates a second-order derivative of the common TA at the moment $t0$.

33. The apparatus according to claim 32, wherein an update period of the common TA is set based on a satellite elevation.

34. The apparatus according to claim 32 or 33, wherein the order of the common TA function is 2.

35. The apparatus according to claim 34, wherein the common TA function is indicated according to the following formula:

$$N_{TA,common}\left(t\right) = at^2 + bt + c \,,$$

wherein

$a$ indicates $\dfrac{1}{2} TA_{commondrift\_variation\_rate,to}$, $b$ indicates

$TA_{commondrift,to} - t_0 \times TA_{commondrift\_variation\_rate,to}$, and $c$ indicates

$\left(t_0\right)^2 \times \dfrac{1}{2} TA_{commondrift\_variation\_rate,to} - t_0 \times TA_{commondrift,to} + N_{TA,common}\left(t_0\right).$

36. The apparatus according to any one of claims 31 to 35, wherein the indication information is carried by using the following signaling:

a system information block SIB or a master information block MIB.

37. The apparatus according to any one of claims 30 to 36, wherein an index value indicates a value of the parameter of the common TA function.

38. The apparatus according to any one of claims 30 to 37, wherein the time period indicates a time interval between updating the parameter of the common TA function for an $N^{th}$ time and updating the parameter of the common TA function for an $(N+1)^{th}$ time, and N is a positive integer; and
the time period is related to the satellite elevation, and different satellite elevations correspond to different lengths of the time period.

39. A communication apparatus, comprising a processor;

the processor is coupled to or decoupled from a memory;
the memory is configured to store a computer program or instructions; and
the processor is configured to execute the computer program or the instructions, so that the method according to any one of claims 1 to 10 or the method according to any one of claims 11 to 19 is performed.

40. A communication apparatus, comprising: a logic circuit and an input/output interface;

the input/output interface is configured to communicate with a module other than the communication apparatus; and
the logic circuit is configured to execute a computer program or instructions, so that the communication apparatus performs the method according to any one of claims 1 to 10, or the communication apparatus performs the method according to any one of claims 11 to 19.

41. A computer-readable storage medium, wherein the computer-readable storage medium stores instructions, and when the instructions are executed by a computer, the method according to any one of claims 1 to 10 or the method according to any one of claims 11 to 19 is performed.

42. A computer program product comprising a computer program or instructions, wherein when the computer program product runs on a computer, the method according to any one of claims 1 to 10 or the method according to any one of claims 11 to 19 is performed.

Satellite

Feeder link

Terminal device 1

Terminal device 2

Terrestrial GW

FIG. 1

Satellite

Terminal device

Step 201: Determine a first message, where the first message includes a parameter of a common TA function, the parameter of the common TA function is preconfigured, and the parameter of the common TA function one-to-one corresponds to a time period

Step 202: Transmit the first message

Step 203: Determine a common TA based on the parameter of the common TA function

FIG. 2

FIG. 3

FIG. 4

Transceiver unit 51

Processing unit 52

FIG. 5

Communication apparatus 600

Transceiver 630

Processor 610

Memory 620

FIG. 6

Communication apparatus 700

Interface circuit 710

Logic circuit 720

FIG. 7

## INTERNATIONAL SEARCH REPORT

| International application No. |
|---|
| **PCT/CN2022/117244** |

**A. CLASSIFICATION OF SUBJECT MATTER**

H04B 7/185(2006.01)i

According to International Patent Classification (IPC) or to both national classification and IPC

**B. FIELDS SEARCHED**

Minimum documentation searched (classification system followed by classification symbols)

H04B7/-; H04J3/-

Documentation searched other than minimum documentation to the extent that such documents are included in the fields searched

Electronic data base consulted during the international search (name of data base and, where practicable, search terms used)

CNABS, CNTXT, CNKI, 万方, WANFANG: 时间提前, 定时提前, TA, 时间段, 周期, 时间区间, 卫星, 同步, 仰角; VEN, ENTXT, 3GPP: TA, time advance, time quantum, period, satellite, elevation angle, synchronization

**C. DOCUMENTS CONSIDERED TO BE RELEVANT**

| Category* | Citation of document, with indication, where appropriate, of the relevant passages | Relevant to claim No. |
|---|---|---|
| X | NTT DOCOMO, INC. ""R1-2107856 Discussion on UL time synchronization enhancements for NTN"" *3GPP TSG RAN WG1 #106-e*, 27 August 2021 (2021-08-27), sections 2-4 | 1-42 |
| X | ZTE. ""R1-2107776 Discussion on UL synchronization for NR-NTN"" *3GPP TSG RAN WG1 #106-e*, 27 August 2021 (2021-08-27), sections 1-5 | 1-42 |
| X | CN 113271135 A (HUAWEI TECHNOLOGIES CO., LTD.) 17 August 2021 (2021-08-17) description, paragraphs 166-364 | 1-42 |
| A | CN 113316956 A (ZTE CORP.) 27 August 2021 (2021-08-27) entire document | 1-42 |
| A | WO 2021139665 A1 (FG INNOVATION COMPANY LIMITED) 15 July 2021 (2021-07-15) entire document | 1-42 |

☐ Further documents are listed in the continuation of Box C.   ☑ See patent family annex.

| * Special categories of cited documents: | "T" | later document published after the international filing date or priority date and not in conflict with the application but cited to understand the principle or theory underlying the invention |
|---|---|---|
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| **10 October 2022** | **30 November 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/117244**

| Patent document cited in search report | | | Publication date (day/month/year) | Patent family member(s) | | | Publication date (day/month/year) |
|---|---|---|---|---|---|---|---|
| CN | 113271135 | A | 17 August 2021 | WO | 2021160025 | A1 | 19 August 2021 |
| CN | 113316956 | A | 27 August 2021 | WO | 2020034574 | A1 | 20 February 2020 |
| | | | | KR | 20210110874 | A | 09 September 2021 |
| | | | | US | 2021345281 | A1 | 04 November 2021 |
| | | | | EP | 3909317 | A1 | 17 November 2021 |
| WO | 2021139665 | A1 | 15 July 2021 | | None | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111157401